# EUROPÄISCHE PATENTANMELDUNG

(11) **EP 4 491 014 A1**
(43) Veröffentlichungstag der Anmeldung: **15.01.2025**
(21) Anmeldenummer: 24187242.3
(22) Anmeldetag: 08.07.2024
(51) Int. Cl.: A01K 1/00

(54) **TÜRSYSTEM, STALL UND VERFAHREN ZUR ZUGANGSKONTROLLE**

(30) Priorität: 14.07.2023 DE 102023118740
(71) Anmelder: Neumann, Christian Alexander, 73479 Ellwangen (DE); Ring, Dominic Jason, 70736 Fellbach (DE)
(72) Erfinder: Neumann, Christian Alexander, 73479 Ellwangen (DE); Ring, Dominic Jason, 70736 Fellbach (DE)
(74) Vertreter: Schneider, Sandra

(57) **Zusammenfassung**

Die Anmeldung betrifft ein Türsystem (10) zur Zugangskontrolle für ein Tier, wobei das Türsystem (10) einen Funkempfänger und zumindest einen Türflügel (3) aufweist,
wobei der Funkempfänger eine Antenne (9) und eine Auswerteeinheit aufweist und eingerichtet ist, ein Funksignal (S) von zumindest einem Sender (1) zu empfangen und das Funksignal (S) auszuwerten,
wobei die Auswertung des Funksignals (S) eine erste und eine zweite Ermittlung umfasst, wobei die erste Ermittlung die Ermittlung von Identitätsinformationen des zumindest einen Senders (1) umfasst, und die zweite Ermittlung umfasst, ob sich der zumindest eine Sender (1) in einem ersten Bereich vor dem Türsystem (10) befindet,
wobei der zumindest eine Türflügel (3) in Abhängigkeit von der Auswertung durch einen Antrieb (8) so bewegbar ist, dass ein für das Tier geeigneter Zugang zu einem zweiten Bereich hinter dem Türsystem (10) gewährt oder verwehrt wird.

Die Anmeldung betrifft weiter einen Stall (60) für Tiere, ein Verfahren zur Zugangskontrolle sowie eine Steuereinheit.

## Beschreibung

### Technisches Gebiet

Die Anmeldung betrifft ein Türsystem für Tiere, einen Stall für Tiere und ein Verfahren zur Zugangskontrolle.

### Hintergrund

In EP4176711A1 wird eine Vorrichtung zum Führen eines Tieres beschrieben, welche mit Schläuchen arbeitet, die sich bei Durchströmung mit Druckluft bewegen.

In AT506628A1 wird eine Vorrichtung zur Überwachung von Nutztieren beschrieben. Jedes Tier trägt einen aktivierbaren Sender, welcher mit einer Überwachungseinrichtung kommuniziert.

### Übersicht

Ein Türsystem zur Zugangskontrolle für ein Tier weist einen Funkempfänger und zumindest einen Türflügel auf.

Der Funkempfänger weist eine Antenne und eine Auswerteeinheit auf. Die Auswerteeinheit des Funkempfängers ist eingerichtet, ein Funksignal von zumindest einem Sender zu empfangen und das Funksignal auszuwerten.

Die Auswertung des Funksignals umfasst eine erste und eine zweite Ermittlung. Die erste Ermittlung umfasst die Ermittlung von Identitätsinformationen des zumindest einen Senders. Die zweite Ermittlung umfasst die Ermittlung von Ortsinformationen, ob sich der zumindest eine Sender in einem ersten Bereich vor dem Türsystem befindet.

Der zumindest eine Türflügel ist in Abhängigkeit von der Auswertung durch einen Antrieb so bewegbar, dass ein für das Tier geeigneter Zugang zu einem zweiten Bereich hinter dem Türsystem gewährt oder verwehrt wird.

Durch das Türsystem lässt sich zum Beispiel der Zugang zu gewissen Bereichen für Tiere, insbesondere Pferde, steuern. Zusätzlich kann auch z. B. die Futterabgabe tierindividuell realisiert werden und die Futteraufnahme tierindividuell gesteuert und überwacht werden. Durch Anbringung des Senders an den Tieren, z. B. durch Einflechten in die Mähne oder getragen an einem Halsband oder einer Fußfessel, lässt sich dabei die Selektion in für die Tiere angenehmer Weise bewirken. Dabei können die Identitätsinformationen den Sendern und damit den jeweiligen Tieren zugeordnet werden. Eine solche Zuordnung kann z. B. durch eine Steuereinheit ausgeführt werden und/oder die Zuordnung kann in einem Datenspeicher abgespeichert sein. Der Datenspeicher kann dabei der Steuereinheit zugeordnet sein und insbesondere in der Steuereinheit angeordnet sein.

Das Türsystem kann z. B. einen Türflügel oder zwei Türflügel aufweisen. Bei geschlossenem Türflügel oder bei geschlossenen Türflügeln ist dabei der Zugang verwehrt. Bei geöffnetem Türflügel oder bei geöffneten Türflügeln ist der Zugang gewährt.

Es ist auch möglich, zwei Türsysteme zusammen zu betreiben und den Türflügel eines zweiten Türsystems in Abhängigkeit von der Auswertung des ersten Türsystems zu bewegen.

Die erste und die zweite Ermittlung der Auswertung kann in zwei getrennten Schritten oder in einem Schritt erfolgen.

In einer Ausführungsform des Türsystems ist der Funkempfänger als Bluetooth-Empfänger und der zumindest eine Sender als Bluetooth-Chip ausgebildet. Der Bluetooth-Chip kann auch als Bluetooth-Tag, Bluetooth-Tracker oder Bluetooth-Beacon bezeichnet werden. Der Bluetooth-Chip ist ein kleines elektronisches Gerät, das das Funksignal nach der Bluetooth-Technologie aussendet. Das Funksignal ist ein periodisches Signal, das von dem Funkempfänger erkannt werden kann. Die Kommunikation kann z. B. über die Bluetooth Low Energy (BLE)-Technologie erfolgen, die energiesparend ist und eine längere Batterielebensdauer ermöglicht. Die Reichweite des Bluetooth Chips kann dabei z. B. bis zu einigen Dutzend Metern betragen.

In einer Ausführungsform des Türsystems ist die Antenne als Antennenarray ausgebildet und die zweite Ermittlung umfasst eine Ermittlung eines Ankunftswinkels des Funksignals. Ein Antennenarray weist matrixförmig angeordnete Einzelantennen auf. Die Einzelantennen im Array können die Phasenverschiebung des eingehenden Funksignals erfassen. Durch die Analyse der Phasendifferenzen zwischen den Antennen kann der Ankunftswinkel des Funksignals bestimmt werden. Aus dem Ankunftswinkel des Funksignals kann die Position des Senders ermittelt werden.

Der Ankunftswinkel kann bei der Bluetooth-Technologie mithilfe des Antennenarrays erfasst werden, auch Bluetooth Direction Finding genannt. Mittels der in dem Antennenarray angeordneten Einzelantennen kann die Richtung des eingehenden Bluetooth-Funksignals ermittelt werden. Der ermittelte Ankunftswinkel kann verwendet werden, um die Position des Bluetooth-Chips zu bestimmen. Alternativ oder zusätzlich kann die Position des Bluetooth-Chips über einen Received Signal Strength Indication (RSSI) der Bluetooth-Technologie ermittelt werden.

In einer Ausführungsform des Türsystems ist der zumindest eine Türflügel zur Gewährung des Zugangs aus einem geschlossenen Zustand in Richtung des ersten Bereiches verschwenkbar. Damit kann der zumindest eine Türflügel zur Gewährung des Zugangs entgegen der Zugangsrichtung verschwenkt werden.

In einer Ausführungsform des Türsystems ist der Antrieb mit einem längenveränderbaren Glied ausgebildet. Hierdurch kann ein Öffnen und Schließen der Türflügel über den Öffnungsbereich bewirkt werden. Zugleich kann das längenveränderbare Glied optional so ausgeführt sein, dass es sich nicht in der der geänderten Länge, also z. B. der Länge, die dem geöffneten zumindest einen Türflügel entspricht, fixiert. Bei einer Ausführungsform des längenveränderbaren Gliedes mit einer Feder kann das so ausgeführt sein, dass sich die Feder dehnt und wieder in die Ursprungslage zurückgeht, sobald die Kraft, z. B. vom Tier oder Pferd in der Tür, nachlässt. Hierdurch schließt sich der Türflügel automatisch wieder, was die Sicherheit erhöht. Durch das Schließen, bewirkt durch die Federwirkung, ist diese Funktion auch ohne das Vorhandensein elektrischer Energie an dem Türsystem realisierbar.

In einer Ausführungsform des Türsystems ist der Funkempfänger im Bereich des Antriebs angeordnet. Hierdurch kann eine kurze und sichere Übertragung von Informationen zwischen Funkempfänger und Antrieb gewährleistet werden.

In einer Ausführungsform des Türsystems weist der Antrieb zumindest einen Elektromotor auf. Der Elektromotor kann als Direktantrieb in der Aufhängung des zumindest einen Türflügels angeordnet sein. Optional kann der Elektromotor als Getriebevariante in der Aufhängung des zumindest einen Türflügels angeordnet ist. In der Getriebevariante ist der Elektromotor mit einem Getriebe kombiniert. Durch die Anordnung in der Aufhängung des Türflügels kann ein schlankes und leicht montierbares Türsystem realisiert werden.

In einer Ausführungsform des Türsystems weist der zumindest eine Türflügel eine Kinematik auf, welche den zumindest einen Türflügel mit einer Kraft beaufschlagt, welche vom Öffnungswinkel des zumindest einen Türflügels abhängt. Hierdurch kann in Abhängigkeit vom Öffnungswinkel eine leichtere oder schwerere Bewegbarkeit realisiert werden. Zum Beispiel kann im geschlossenen Zustand ein Öffnen nur mit sehr viel Kraft ermöglicht werden, so dass ein unbeabsichtigtes Öffnen erschwert werden kann.

In einer Ausführungsform weist das Türsystem eine Durchlaufsperre auf, welche in Zugangsrichtung öffenbar ist, wobei die Durchlaufsperre den Durchgang entgegen der Zugangsrichtung sperrt. Die Durchlaufsperre weist zumindest einen Flügel auf, welcher in Zugangsrichtung öffenbar ist und den Durchgang entgegen der Zugangsrichtung sperrt. Der zumindest eine Flügel ist selbsttätig schließend und vorgespannt.

In einer Ausführungsform weist die Durchlaufsperre des Türsystems ein erstes Flügelpaar auf, welches in Zugangsrichtung öffenbar ist, wobei das erste Flügelpaar den Durchgang entgegen der Zugangsrichtung sperrt, wobei das erste Flügelpaar selbsttätig schließend und vorgespannt ist. Hierdurch kann die Durchlaufsperre realisiert werden, die einen Durchgang entgegen der Zugangsrichtung verhindert.

In einer Ausführungsform weist die Durchlaufsperre des Türsystems ein zweites Flügelpaar auf, wobei ein jeweiliger Flügel des zweiten Flügelpaares von einem jeweiligen Flügel des ersten Flügelpaares zumindest teilweise umfasst wird. Hierdurch kann die Durchlaufsperre weiter verbessert werden.

In einer Ausführungsform des Türsystems ist das zweite Flügelpaar in Zugangsrichtung öffenbar, wobei das zweite Flügelpaar den Durchgang entgegen der Zugangsrichtung sperrt, wobei das zweite Flügelpaar selbsttätig schließend und vorgespannt ist. Damit weist das zweite Flügelpaar die gleiche Funktionalität wie das erste Flügelpaar auf, so dass bei gleichzeitigem Wirken der unbeabsichtigte Durchgang entgegen der Zugangsrichtung noch besser verhindert werden kann.

In weiteren Ausführungsformen können die jeweiligen Flügel der Durchlaufsperre auch unabhängig voneinander bewegt werden. Dies umfasst, dass die Mechanik der einzelnen Flügel, z. B. der Schließmechanismus und die Vorspannung für jeden der Flügel einzeln ausgebildet ist und einzeln funktionieren kann.

In einer Ausführungsform des Türsystems sind an den Seitenelementen des Rahmens des Türsystems Zaunelemente anschließbar, wobei der Winkel zwischen dem Rahmen und den Zaunelementen beliebig wählbar ist. Hierdurch erlaubt das Türsystem eine flexible Anordnung im Raum. Die Geometrie der Anordnung lässt sich damit durch die Umgebung bestimmen, wobei sich das Türsystem flexibel integrieren lässt.

In einer Ausführungsform des Türsystems ist das Türsystem durch Entfernen des Funkempfängers zu einem abhängig wirkenden Türsystem umrüstbar. Ein solches abhängig wirkendes Türsystem kann zum Beispiel den Zugang in Abhängigkeit von einem empfangenen Türsignal gewähren oder verwehen. Das Türsignal kann zum Beispiel von einem Türsystem mit Funkempfänger empfangen werden.

Ein Türsystem kann dabei insbesondere auch ein Türsystem mit Funkempfänger und ein abhängig betreibbares Türsystem aufweisen. Der zumindest eine Türflügel des abhängig betreibbaren Türsystems ist dabei in Abhängigkeit von der Auswertung des Funksignals durch den Funkempfänger bewegbar, um den Zugang zu dem zweiten Bereich hinter dem abhängig betreibbaren Türsystem zu gewähren oder zu verwehren.

In einer Ausführungsform des Türsystems ist das Türsystem durch Entfernen des Funkempfängers, des Antriebs und des zumindest einen Türflügels zu einer Einbahntür umrüstbar ist. Die Einbahntür gewährt Zugang zu einem Bereich hinter der Einbahntür. In der Gegenrichtung ist der Zugang gesperrt.

Ein Stall für Tiere, insbesondere Pferde, weist zumindest ein beschriebenes Türsystem auf, wobei die jeweiligen Identitätsinformationen den jeweiligen Tieren in dem Stall zuordenbar sind. Damit lässt sich beispielsweise ein Stall in Gruppenhaltung für z. B. Pferde oder andere Nutztiere realisieren, bei dem der Zugänge durch das Türsystem kontrolliert werden können. Selektiv können so Zugänge für individuelle Tiere gewährt oder verwehrt werden.

In einer Ausführungsform weist der Stall mehrere abgezäunte Bereiche auf, wobei der Zugang zu zumindest einem der Bereiche durch das zumindest eine Türsystem ermöglicht wird. Die Abzäunung zwischen den Bereichen ist dabei sehr flexibel, da das Türsystem die Anbringung von Zaunelementen in breiten Winkelbereichen ermöglicht. Die Bereiche, zu denen für individuelle Tiere der Zugang gewährt oder verwehrt wird, können z. B. Freibereiche, Futterbereich, Liegebereiche oder ähnliches sein.

In einer Ausführungsform weist der Stall zumindest einen Stallbereich und zumindest einen Fressbereich auf. Ein Fressbereich ist z. B. ein spezieller Futterbereich, in dem z. B. Kraftfutter angeboten wird.

In einer Ausführungsform weist der Stall mindestens einen Selektionsbereich auf, welcher über mehrere Türsysteme verlassen werden kann, wobei der mindestens eine Selektionsbereich die ersten Bereiche der jeweiligen Türsysteme umfasst. Die Türsysteme können dabei den Zugang zu den verschiedenen Bereichen des Stalles gewähren oder verwehren. Es können auch Einbahntüren vorgesehen sein, die den Ausgang aus dem mindestens einen Selektionsbereich ermöglichen.

In einer Ausführungsform des Stalls ist das Betreten des mindestens einen Selektionsbereiches durch ein Tier durch eine Sensortür erfassbar. Bei der Sensortür kann es sich zum Beispiel um ein beschriebenes Türsystem handeln, welches die Identitätsinformationen des Tiers ermittelt, welches das Türsystem durchgeht. Optional können die mehreren Türsysteme zumindest ein abhängig wirkendes Türsystem aufweisen, dessen zumindest einer Türflügel in Abhängigkeit von einem durch die Sensortür bereitgestellten Türsignal so bewegbar ist, dass der für das Tier geeignete Zugang zu dem zweiten Bereich hinter dem abhängig wirkenden Türsystem gewährt oder verwehrt wird. In Abhängigkeit von den Identitätsinformationen des Tieres, welches sich in dem mindestens einen Selektionsbereich befindet, kann also der Zugang zu den Bereichen, die sich an den mindestens einen Selektionsbereich anschließen gewährt oder verwehrt werden.

In einer Ausführungsform des Stalls ist die Sensortür als ein beschriebenes Türsystem, welches den Zugang zu dem mindestens einen Selektionsbereich gewährt oder verwehrt, ausgebildet, welches keinem weiteren Tier den Zugang zu dem mindestens einen Selektionsbereich gewährt, wenn eine Höchstzahl von Tieren in dem mindestens einen Selektionsbereich erreicht ist. Zum Beispiel kann die Höchstzahl von Tieren in dem mindestens einen Selektionsbereich auf eins begrenzt werden, um die Zugänge zu an den mindestens einen Selektionsbereich anschließende Bereiche gezielt und individuell steuern zu können.

In einer Ausführungsform weist der Stall zumindest eine Einbahntür auf, wobei die zumindest eine Einbahntür einem jeweiligen Tier den Durchgang in einer Durchgangsrichtung ermöglicht, wobei die zumindest eine Einbahntür eine Durchlaufsperre aufweist. Die Durchlaufsperre ist in Zugangsrichtung öffenbar und sperrt den Durchgang entgegen der Zugangsrichtung. Die Durchlaufsperre weist zumindest einen Flügel auf, welcher in Zugangsrichtung öffenbar ist und den Durchgang entgegen der Zugangsrichtung sperrt. Der zumindest eine Flügel ist selbsttätig schließend und vorgespannt.

Die Durchlaufsperre kann ein erstes Flügelpaar aufweisen, welches in Durchgangsrichtung öffenbar ist, wobei das erste Flügelpaar den Durchgang entgegen der Durchgangsrichtung sperrt, wobei das erste Flügelpaar selbsttätig schließend und vorgespannt ist.

Die Durchlaufsperre der zumindest einen Einbahntür kann ein zweites Flügelpaar aufweisen, wobei ein jeweiliger Flügel des zweiten Flügelpaares von einem jeweiligen Flügel des ersten Flügelpaares zumindest teilweise umfasst sein kann.

Das zweite Flügelpaar kann in Durchgangsrichtung öffenbar sein, wobei das zweite Flügelpaar den Durchgang entgegen der Durchgangsrichtung sperren kann, wobei das zweite Flügelpaar selbsttätig schließend und vorgespannt ausgebildet sein kann.

In weiteren Ausführungsformen können die jeweiligen Flügel der Durchlaufsperre auch unabhängig voneinander bewegt werden. Dies umfasst, dass die Mechanik der einzelnen Flügel, z. B. der Schließmechanismus und die Vorspannung für jeden der Flügel einzeln ausgebildet ist und einzeln funktionieren kann.

Die Einbahntür kann somit wie das beschriebene Türsystem ausgebildet sein, bei dem der Funkempfänger, der Antrieb und der zumindest eine Türflügel entfernt wurde.

In einer Ausführungsform des Stalls ist der zumindest eine Fressbereich als ein Futterbereich, insbesondere für Kraftfutter, ausgebildet, wobei der Zugang zu dem Fressbereich über die zumindest eine Sensortür ermöglicht wird. Das Verlassen des Fressbereiches über die zumindest eine Einbahntür ermöglicht. Es ist weiter eine Ausgabevorrichtung für das Futter vorgesehen, wobei die Menge des ausgegebenen Futters, insbesondere Kraftfutters, von der Identitätsinformation abhängt. Hierdurch wird wiederum ermöglicht, die ausgegebene Menge an Futter genau an das Tier anzupassen. Überdies können die Informationen über das ausgegebene Futter bezogen auf das individuelle Tier z. B. durch die Steuereinheit gespeichert und gesteuert werden.

Bei einem Verfahren zur Zugangskontrolle zu zumindest einem Bereich in dem Stall für Tiere mittels eines Türsystems, weist das Türsystem einen Funkempfänger und zumindest einen Türflügel auf. Das Verfahren weist auf:
Empfangen des Funksignals durch den Funkempfänger von dem zumindest einen Sender,
Auswerten des Funksignals, wobei bei der Auswertung Identitätsinformationen des zumindest einen Senders ermittelt werden und ermittelt wird, ob sich der zumindest eine Sender in einem ersten Bereich vor dem Türsystem befindet,
Bewegen des zumindest einen Türflügels in Abhängigkeit von der Auswertung des Funksignals durch den Antrieb, so dass ein für das Tier geeigneter Zugang zu einem zweiten Bereich hinter dem Türsystem gewährt oder verwehrt wird.

Eine Steuereinheit weist einen Datenspeicher auf. In dem Datenspeicher ist eine Zuordnung von jeweiligen Identitätsinformationen von Sendern zu jeweiligen Tieren gespeichert. Die Steuereinheit ist zum Datenaustausch mit einem oder mehreren beschriebenen Türsystemen eingerichtet. Die ausgetauschten Daten umfassen die Identitätsinformationen, welche jeweiligen Sendern und damit jeweiligen Tieren zugeordnet sind. Mittels der Steuereinheit kann die Steuerung der Türsysteme in dem Stall, die Speicherung der tierbezogenen Daten und/oder die Steuerung der Ausgabe von Futter ermöglicht werden. Mittels der Steuereinheit lässt sich eine intelligente Steuerung des Stalls mit den Türsystemen realisieren.

### FiQUrenliste

Ausführungsbeispiele der Anmeldung sind in den Figuren dargestellt und werden in der nachfolgenden Beschreibung näher erläutert.

Es zeigen
**Fig. 1** schematisch ein Türsystem in einer Ansicht in Durchgangsrichtung,
**Fig. 2** schematisch das Türsystem von Fig. 1 in Draufsicht mit Sender,
**Fig. 3** schematisch ein abhängig wirkendes Türsystem in einer Ansicht in Durchgangsrichtung,
**Fig. 4** schematisch das abhängig wirkende Türsystem von Fig. 3 in Draufsicht,
**Fig. 5** schematisch eine Einbahntür in einer Ansicht in Durchgangsrichtung,
**Fig. 6** schematisch die Einbahntür von Fig. 5 in Draufsicht,
**Fig. 7** schematisch einen Stall und
**Fig. 8** ein Verfahren zur Zugangskontrolle.

Es werden in den Figuren die gleichen Bezugszeichen für gleiche oder ähnliche Elemente verwendet. Die Darstellungen in den Figuren können nicht maßstäblich sein.

### Fiqurenbeschreibunq

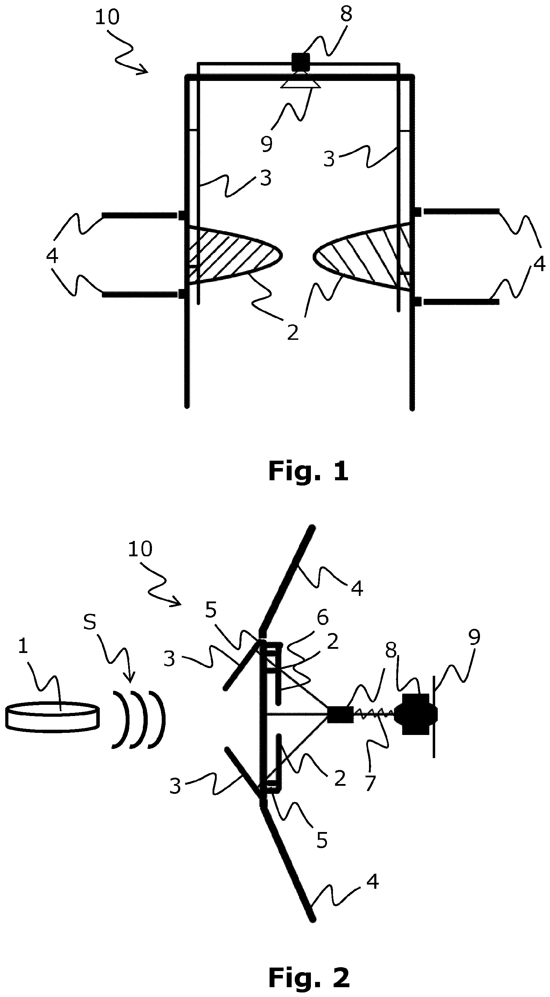

Fig. 1 zeigt schematisch ein Türsystem 10 zur Zugangskontrolle für ein Tier in einer Ansicht von einem ersten Bereich vor dem Türsystem 10 aus gesehen. Die Richtung der Ansicht auf das Türsystem 10 entspricht der möglichen Durchgangsrichtung durch das Türsystem 10. Das Türsystem 10 weist einen Funkempfänger und zwei Türflügel 3 auf. Optional lässt sich das Türsystem auch mit einem Türflügel 3 oder mehr als zwei Türflügeln 3 realisieren. Der Funkempfänger weist eine Antenne 9 und eine Auswerteeinheit auf. Der Funkempfänger ist eingerichtet, ein Funksignal S von zumindest einem Sender 1 zu empfangen.

Die Auswerteeinheit des Funkempfängers ist eingerichtet, das Funksignal S auszuwerten. Dabei umfasst die Auswertung des Funksignals S die Ermittlung von Identitätsinformationen des zumindest einen Senders 1 und von Ortsinformationen, ob sich der zumindest eine Sender 1 in dem ersten Bereich vor dem Türsystem 10 befindet.

Die Türflügel 3 werden in Abhängigkeit von der Auswertung durch einen Antrieb 8 geöffnet, so dass das Tier Zugang zu einem zweiten Bereich hinter dem Türsystem 10 erhält. Die Gewährung des Zugangs hängt dabei davon ab, ob dem Tier, das mittels des Senders 1 identifiziert wurde, der Zugang zu dem zweiten Bereich gewährt werden soll. In Abhängigkeit von der Auswertung können die Türflügel 3 auch geschlossen bleiben, wenn das Tier, das über den Sender 1 identifiziert wurde, keinen Zugang zum zweiten Bereich erhalten soll.

Der Funkempfänger kann insbesondere als Bluetooth-Empfänger ausgebildet sein. Der zumindest eine Sender 1 kann insbesondere als Bluetooth-Chip ausgebildet sein. Die Antenne 9 kann insbesondere als Antennenarray ausgebildet sein und die Ermittlung der Ortsinformationen kann insbesondere über eine Ermittlung eines Ankunftswinkels des Funksignals S erfolgen.

An Seitenelementen des Rahmens des Türsystems 10 sind Zaunelemente 4 anschließbar. Der Winkel zwischen dem Rahmen und den Zaunelementen 4 ist beliebig wählbar, so dass das Türsystem 10 flexibel in beliebige Abzäunungen einfügbar ist.

Das Türsystem 10 weist eine Durchlaufsperre auf, welche den Durchgang durch das Türsystem 10 entgegen der Zugangsrichtung sperrt. Die Durchlaufsperre sperrt also den Durchgang vom zweiten Bereich in den ersten Bereich. Die Durchlaufsperre weist ein Einbahntürflügelpaar auf, welches ein erstes Flügelpaar 2 aufweist. Das erste Flügelpaar 2 ist in Zugangsrichtung öffenbar, wobei das erste Flügelpaar 2 den Durchgang entgegen der Zugangsrichtung sperrt, wobei das erste Flügelpaar 2 selbsttätig schließend und vorgespannt ist.

Optional kann die Durchlaufsperre des Türsystems 10 ein zweites Flügelpaar 12 aufweisen, wobei ein jeweiliger Flügel des zweiten Flügelpaares 12 von einem jeweiligen Flügel des ersten Flügelpaares 2 zumindest teilweise umfasst wird. Das zweite Flügelpaar 12 kann in Zugangsrichtung öffenbar sein, wobei das zweite Flügelpaar 12 den Durchgang entgegen der Zugangsrichtung sperrt. Das zweite Flügelpaar 12 kann selbsttätig schließend und vorgespannt ausgebildet sein. Das zweite Flügelpaar 12 kann die gleiche Funktionalität wie das erste Flügelpaar 2 aufweisen, so dass bei gleichzeitigem Wirken von erstem und zweitem Flügelpaar 2, 12 der unbeabsichtigte Durchgang entgegen der Zugangsrichtung noch besser verhindert werden kann.

Die jeweiligen Flügel der Durchlaufsperre können auch unabhängig voneinander bewegt werden. Dies umfasst, dass die Mechanik der einzelnen Flügel, z. B. der Schließmechanismus und die Vorspannung für jeden der Flügel einzeln ausgebildet ist und einzeln funktionieren kann.

In Fig. 2 ist schematisch das Türsystem 10 von Fig. 1 in Draufsicht dargestellt. Der Sender 1 befindet sich im ersten Bereich vor dem Türsystem 10.

Dargestellt ist der Antrieb 8 als Koppelgetriebe mit Motor mit einem längenveränderbaren Glied 7, z. B. einer Feder, mittels welchem die Türflügel 3 zur Gewährung des Zugangs aus dem geschlossenen Zustand in Richtung des ersten Bereiches geöffnet und wieder geschlossen werden können. Das längenveränderbare Glied 7 kann insbesondere so ausgeführt sein, dass es sich nicht in der der geänderten Länge, also z. B. der Länge, die den geöffneten Türflügeln 3 entspricht, fixiert. Bei einer Ausführungsform des längenveränderbaren Gliedes mit einer Feder kann das so ausgeführt sein, dass sich die Feder dehnt und wieder in die Ursprungslage zurückgeht, sobald die Kraft, z. B. vom Tier oder Pferd in der Tür, nachlässt. Hierdurch schließen sich die Türflügel 3 automatisch wieder, was die Sicherheit erhöht. Durch das Schließen, bewirkt durch die Federwirkung, ist diese Funktion auch ohne das Vorhandensein elektrischer Energie an dem Türsystem 10 realisierbar.

Im dargestellten Beispiel ist der Funkempfänger mit seiner Antenne 9 im Bereich des Antriebs 8 angeordnet. Als weitere Antriebsform ist der Direktbetrieb der Aufhängung der jeweiligen Türflügel 3 denkbar, z.B. über die Achse oder Angel.

Das Türsystem 10 weist zwei Türflügel 3 auf, die angetrieben werden können. Die Türflügel 3 öffnen entgegengesetzt der Laufrichtung des Tieres. Um beim Schlie-ßen der Türflügel 3 kein darinstehendes Lebewesen einzuklemmen, kann eine speziell ausgeführte Kinematik im Antrieb 8 verbaut sein. Dabei ist die Kinematik so ausgeführt, dass sie in Abhängigkeit vom Winkel der Türöffnung eine höhere Widerstandskraft aufweist und somit das Tier sanft dazu bewegen kann vorwärtszugehen. Die Kinematik kann vorteilhaft so ausgeführt werden, dass Verletzungen am Tier vermieden werden. Sollte das Türsystem 10 doch einmal rückwärts passiert werden, dann schließen sich die Türflügel 3 automatisch wieder durch die Längenänderung des Glieds 7 des Antriebs 8. Dieses Verhalten kann so ausgelegt werden, dass es auch bei Stromausfall funktioniert. Dies ist vorteilhaft in einem Stall 60 für Tiere, da gewährleistet werden kann, dass mögliche Fehlfunktionen oder sonstige Ereignisse die Sicherheit nicht beeinträchtigen und die Tiere vor Verletzungen, Quetschungen und/oder Panik geschützt werden können.

Die Bewegung der Türflügel 3 und/oder der Durchlaufsperre kann über ein Dämpferelement 5 gedämpft werden.

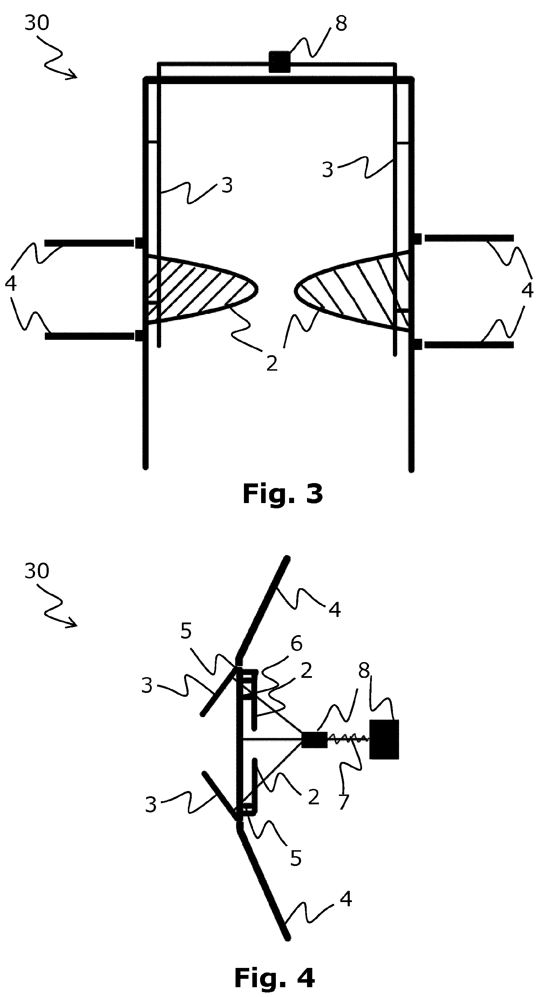

In Fig. 3 ist schematisch ein abhängig wirkendes Türsystem 30 in einer Ansicht in Durchgangsrichtung dargestellt. Das Türsystem 10 ist modular aufgebaut und kann durch Entfernen des Funkempfängers zu einem abhängig wirkenden Türsystem 30 umrüstbar sein.

Das abhängig wirkende Türsystem 30 kann durch Umrüstung aus dem Türsystem 10 entstehen oder ein eigenständiges abhängig wirkendes Türsystem 30 sein. Das abhängig wirkende Türsystem 30 weist keinen Funkempfänger auf, jedoch ansonsten die gleichen Elemente wie das Türsystem 10.

In Fig. 4 ist schematisch das abhängig wirkende Türsystem 30 von Fig. 3 in Draufsicht dargestellt.

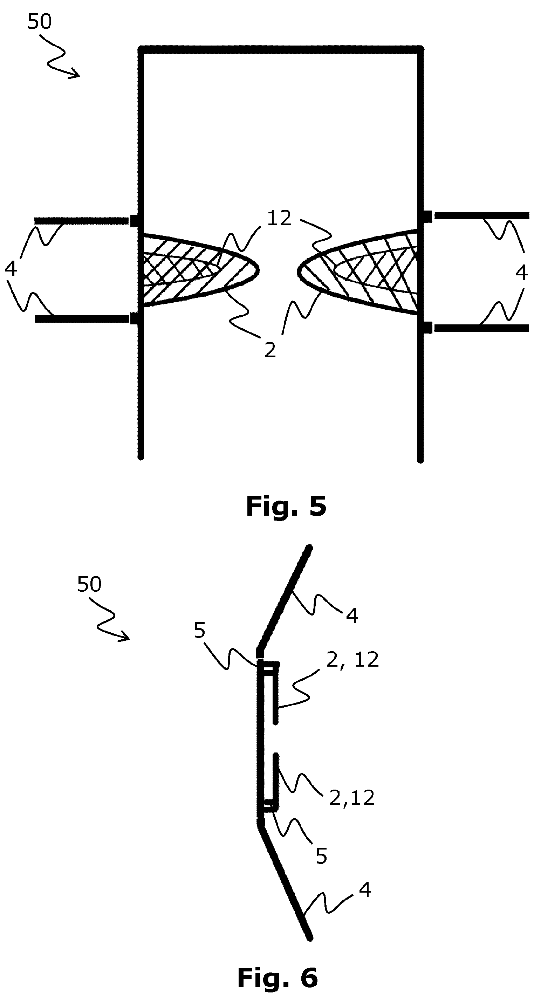

In Fig. 5 ist schematisch eine Einbahntür 50 in einer Ansicht in Durchgangsrichtung dargestellt.

Das Türsystem 10 ist modular aufgebaut und kann durch Entfernen des Funkempfängers des Antriebs 8 und der Türflügel 3 zu der Einbahntür 50 umrüstbar sein. Die Einbahntür 50 kann durch Umrüstung aus dem Türsystem 10 entstehen oder eine eigenständige Einbahntür 50 sein. Die Einbahntür 50 kann so ausgelegt werden, dass sie stromlos funktioniert.

Die Einbahntür 50 weist den Funkempfänger, den Antrieb 8 und die Türflügel 3 nicht auf, weist jedoch ansonsten die gleichen Elemente wie das Türsystem 10 auf.

Auf der Seite des zweiten Bereiches der Einbahntür 50 ist die Durchlaufsperre mit dem ersten Flügelpaar 2 und einem zweiten Flügelpaar 12 angeschlagen. Die Durchlaufsperre öffnet in Laufrichtung. Die Durchlaufsperre wird vom Tier selbstständig aufgedrückt und schließt sich nach dem Passieren selbsttätig. Die Durchlaufsperre der Einbahntür 50 kann aus einem, zwei, drei, vier oder mehr Flügeln bestehen.

Im in Fig. 5 dargestellten Ausführungsbeispiel handelt es sich um zwei Doppelflügelpaare, die ineinander geschachtelt sind, jeder aber einzeln selbsttätig schließend und vorgespannt ist. Bei der Ausführung der Durchlaufsperre mit vier Flügeln wird es für Tiere, insbesondere Pferde, deutlich erschwert, diese aufzuziehen und in entgegengesetzter Richtung hindurchzulaufen.

In Fig. 6 ist schematisch die Einbahntür von Fig. 5 in Draufsicht dargestellt.

Das Türsystem 10 von Fig. 1 und Fig. 2 und/oder das abhängig wirkende Türsystem 30 von Fig. 3 und Fig. 4 kann ebenfalls einen Durchlaufsperre aufweisen, wie die Einbahntür 50 von Fig. 5 und Fig. 6. Die Durchlaufsperre des Türsystems 10 und des abhängig wirkenden Türsystems 30 können wie die Durchlaufsperre der Einbahntür 50 ausgebildet sein und optional ein oder zwei Flügelpaare aufweisen oder nur einen oder drei oder mehr Flügel.

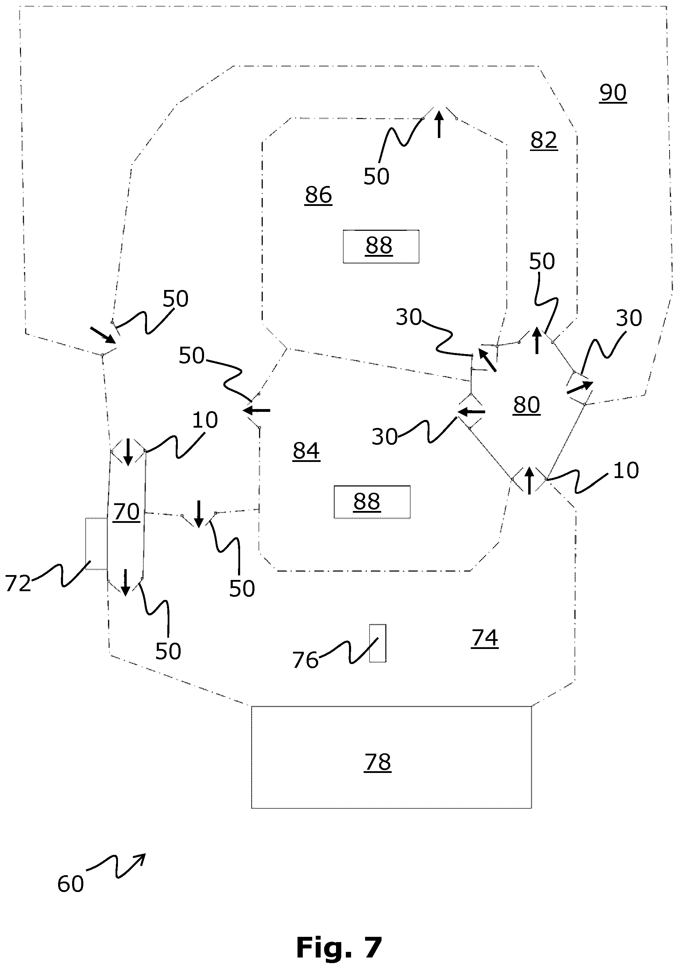

In Fig. 7 ist schematisch ein Stall 60 für Tiere dargestellt. Der Stall 60 weist zwei Türsysteme 10 als Selektionstüren 10, drei abhängig wirkende Türsysteme 30 und sechs Einbahntüren 50 auf. Der Stall 60 weist mehrere abgezäunte Bereiche 70, 74, 80, 84, 86, 90 auf. Der Stall 60 weist zwei Stallbereiche 74, 82 und drei Fressbereiche 70, 84, 86 auf. In zwei der Fressbereiche 84, 86 sind Heuraufen 88 angeordnet. In dem Fressbereich 70 ist ein Kraftfutterautomat 72 angeordnet. Ein Liegebereich 78 ist einem der Stallbereiche 74 zugeordnet. Der Liegebereich ist zum bequemen Liegen der Tiere ausgelegt. In dem Stallbereich 74 ist eine Tränke 76 angeordnet.

Tieren, bevorzugt jedem Tier in dem Stall 60, ist ein jeweiliger Sender 1 zugeordnet, der an dem Tier angebracht ist. Über den jeweiligen Sender 1 und den damit verbundenen Identitätsinformationen sind dem Tier Attribute, wie z.B. Zugangsrechte und Fütterungsmengen zugewiesen und in einem Datenspeicher hinterlegt. Unter Verwendung der Identitätsinformationen der einzelnen Tiere im Stall 60 und einen Datenabgleich können Bereiche 70, 80, 84, 86, 90 freigegeben werden und/oder Futter ausgegeben werden. Der Stall 60 kann autonom betrieben werden und optional so ausgelegt werden, dass z. B. nur im Störungsfall und/oder zur Befüllung der Vorratsbehälter z. B. für Futter eingegriffen werden muss.

Ausgehend von dem Stallbereich 74 ist über eine der Selektionstüren 10 der Zugang zu einem Selektionsbereich 80 möglich. Der Selektionsbereich 80 kann über drei abhängig wirkende Türsysteme 30 oder über eine Einbahntür 50 verlassen werden. Der Selektionsbereich 80 umfasst dabei die ersten Bereiche der jeweiligen abhängig wirkenden Türsysteme 30 und der jeweiligen Einbahntüren 50.

Das Betreten des Selektionsbereiches 80 durch ein Tier ist durch die Sensortür 10 erfassbar. Die Sensortür 10 des Selektionsbereiches 80 gewährt keinem weiteren Tier den Zugang zu dem Selektionsbereich 80, wenn eine Höchstzahl von Tieren in dem Selektionsbereich 80 erreicht ist. Diese Höchstzahl kann zum Beispiel eins sein.

Die abhängig wirkenden Türsysteme 30 des Selektionsbereiches 80 gewähren oder verwehren in Abhängigkeit von den durch die Selektionstür 10 ermittelten Identitätsinformationen dem Tier den Zugang zu dem zweiten Bereich hinter dem abhängig wirkenden Türsystem 30. Die Einbahntür 50 des Selektionsbereiches 80 lässt das Verlassen des Selektionsbereiches 80 in den Stallbereich 82 zu.

Durch den Selektionsbereich 80 ist es möglich das Tier, z. B. ein einzelnes Pferd, zunächst von der Herde abzutrennen, z. B. um es zu leiten oder ihm Futter zuzuteilen.

In einem Ausführungsbeispiel kann dies beispielhaft folgendermaßen ablaufen: Die Tiere, z. B. Pferde einer Herde können sich z. B. zunächst im allgemeinen Stallbereich 74 aufhalten. Im Ruhezustand des Selektionsbereiches 80 kann das Türsystem 10 als die Sensortür 10 des Selektionsbereiches 80 offen sein, alle anderen können geschlossen sein. Möchte ein Tier fressen, betritt es den Selektionsbereich 80 durch das Türsystem 10. Direkt nach Betreten schließt sich das Türsystem 10 und kein zweites Tier kann in den Selektionsbereich 80 gelangen. Über die Antenne 9, die an dem Türsystem 10 verbaut ist, wird das Tier über die ermittelten Identitätsinformationen identifiziert. Ein Datenabgleich mit der Steuereinheit prüft die Zugangsberechtigungen aufgrund derer sich nun eine der oder mehrere abhängig wirkenden Türsysteme 30 öffnet oder alle geschlossen bleiben. Hat das Tier zu diesem Zeitpunkt keine Berechtigung auf Zutritt, bleiben alle abhängig wirkenden Türsysteme 30 geschlossen und das Tier kann den Selektionsbereich 80 wieder durch die Einbahntür 50 verlassen. Hat das Tier den Selektionsbereich 80 verlassen, öffnet sich das Türsystem 10 wieder. Darf ein Tier in einen der Heubereiche 84, 86 oder eine Koppel 90, so kommt es davon durch eine der Einbahntüren 50 wieder zurück in den Stallbereich 82.

Die Zuweisung von Kraftfutter kann auch über das Türsystem 10 erfolgen. Das Tier, z. B. Pferd, betritt den Futterbereich 70 durch das Türsystem 10, wird erkannt und die für das Tier hinterlegte Menge Futter wird durch den Kraftfutterautomaten 72 ausgegeben. Anschließend verlässt es durch die Einbahntür 50 wieder den Futterbereich 70 zurück in den Stallbereich 74.

Über den Futterautomaten, z. B. den Kraftfutterautomaten kann aus großen Vorratsspeichern eine gewisse Menge Futter für die jeweiligen Tiere bereitgestellt werden. Es ist möglich, bei dem Futterautomaten, z. B. Kraftfutterautomaten 72, für eine Futtersorte zu Beginn eine Art Kalibrierung durchzuführen. Somit ist die Menge bekannt, die der Automat bei einem Vorgang ausgibt. Der Futterautomat, z. B. Kraftfutterautomat 72, kann vorteilhaft die Menge an Futter, die er ausgibt, genau messen, insbesondere mit einer Auflösung im 1 Gramm Bereich. Über das Türsystem 10 kann dann nachvollzogen werden, welches Tier wie viel davon gegessen hat. Über die Verbindung mit dem Datensatz, kann auch ermittelt werden, ob das Tier überhaupt noch etwas bekommt und wenn ja in welcher Menge. Auch bei Wechsel der Futtersorte oder z. B. bei einer anderen Charge, bei der das Volumengewicht ein anderes ist, kann durch den Futterautomaten, z. B. Kraftfutterautomaten 72, durch das genaue Wiegen, die vorgebbare Menge Futter pro Tier eingehalten werden. Auch lassen sich Diäten, Mischungen oder ähnliches durch Einstellung der Verzehrmenge im Datensatz realisieren. Möglich wäre auch die gezielte Gabe von Futter, wie z. B. Leckerlis durch eine entfernte Person, z. B. den Tierbesitzer, z. B. mittels eines Fernzugriffs auf die Steuereinheit. Insgesamt können sich die Türsysteme 10 und/oder der Futterautomat, z. B. Kraftfutterautomat 72, wie Internet-of-Things Vorrichtungen realisieren lassen. Insbesondere eine Abrechnung mit dem Tierbesitzer über das Futter nach Verbrauch kann eine vorteilhafte Anwendung sein.

Durch den beschriebenen Stall 60 mit der Anordnung der Bereiche 70, 74, 80, 84, 86, 90 mit der beschriebenen Lenkung der Tiere, können die Tiere vollautomatisch gefüttert und zur Bewegung angeregt werden. So entsteht ein großer Bewegungsanreiz für die Tiere, der zur Gesunderhaltung beiträgt.

Mit der beschriebenen Bluetooth-Technologie kann eine Ortung des Senders 1 im Bereich von z. B. unter im erfolgen. Es kann also erkannt werden welches Tier sich gerade im Selektionsbereich 80 oder im Futterbereich 70 befindet und durch einen Datenabgleich eine Türe des Selektionsbereiches 80 geöffnet werden oder der Futterautomat so angesteuert werden, dass er eine vorgegebene Futtermenge ausgibt. Die Funktechnik wird dabei unterstützt von einem Öffnungssensor 6, der die Öffnung der Flügel der Durchlaufsperre detektiert. Somit kann zusätzlich erkannt werden, wann ein Tier den Selektionsbereich 80 oder den Futterbereich 70 betritt und wann es ihn durch welche Tür wieder verlassen hat. So kann z.B. nach Betreten die Anfrage bei der Antenne 9 gestartet werden, welches Tier durch das Türsystem 10 erkannt wird.

Der in Fig. 7 dargestellte Selektionsbereich 80 ist beispielhaft. Durch die Modularität und die eigenständige Funktionsweise jedes einzelnen Türsystems 10, 30, 50 können diese in jeder denkbaren Anordnung zueinander positioniert werden. Es ist also z.B. ein Selektionsbereich 80 möglich, der das Türsystem 10 als Eingang, das abhängig wirkende Türsystem 30 als Ausgang in den Heubereich 86 oder die Koppel 90 hat und die Einbahntür 50 als Ausgang in den Stallbereich 74 zurück aufweist. Alternativ oder zusätzlich kann der Selektionsbereich 80 zwei Heubereiche 84, 86 anbieten oder ähnliches. Die freie Anordnung der Türsysteme 10, 30, 50 macht die Planung eines Stalls 60 einfach und sehr flexibel. Der modulare Aufbau erlaubt ebenfalls den Umbau der Türsysteme 10, 30, 50 zu einem späteren Zeitpunkt. Die Einbahntür 50 kann auch durch einen oder mehrere Türflügel 3 und einen Antrieb 8 erweitert werden oder das Türsystem 10 zu einer Einbahntür 50 reduziert werden.

Zusätzliche Flexibilität ergibt sich auch durch die mögliche Wahl der Zaunwinkel eines Zaunes mit Zaunelementen 4. Der Zaun erlaubt mittels der Zaunelemente die Verbindung der einzelnen Türsysteme 10, 30, 50 untereinander sowie mit einem Zaun oder mit Zaunelementen des Stalls 60. Dies kann als Abgrenzung der einzelnen Bereiche 70, 74, 80, 84, 86, 90 untereinander dienen. Zum anderen wird die Stabilität durch die Abstützung der Türsysteme 10, 30, 50 untereinander erhöht. Die Zaunelemente können z. B. mit einem beliebigen Winkel, z. B. von bis zu 180°, zwischen Zaunelement und Rahmen der Türsysteme 10, 30, 50 verbunden werden was große Freiheitsgrade ermöglicht. Der Winkel zwischen Zaunelement und Rahmen der Türsysteme 10, 30, 50 kann also in einem Bereich von bis zu 180° in beiden Richtungen gewählt werden. Der Stall 60 kann ohne weidezaun-ähnlichen, unter Strom stehende Elementen auskommen.

Weiter ist es möglich, Sackgassen oder spitze Winkel zu vermeiden, in die ein rangniedriges Pferd hineingetrieben werden könnte. Dies ist insbesondere bei Pferdeställen wichtig. Selbst rechte Winkel können vermieden werden wie in Fig. 7 dargestellt. Durch die mögliche Verbindung der einzelnen Türsysteme 10, 30, 50 untereinander ist ein Aufbau mit möglichst vielen Ecken mit großem Innenwinkel und einer klaren Führung des Tiers zum Türsystem 10, 30, 50 hin gewährleistet. Des Weiteren lassen sich enge Leitgänge vermeiden und einladende Selektionsbereiche 80 und/oder Futterbereiche 70 realisieren.

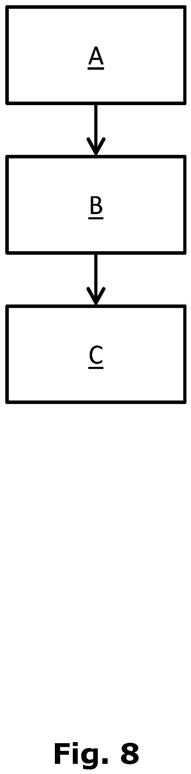

In Fig. 8 ist ein Verfahren zur Zugangskontrolle zu einem Bereich 70, 80, 84, 86, 90 in einem Stall 60 für Tiere mittels eines Türsystems 10 dargestellt. Das Türsystem 10 weist einen Funkempfänger und zumindest einen Türflügel 3 auf. Das Verfahren weist auf:
A) Empfangen eines Funksignals S durch den Funkempfänger von zumindest einem Sender 1,
B) Auswerten des Funksignals S, wobei bei der Auswertung Identitätsinformationen des zumindest einen Senders 1 ermittelt werden und ermittelt wird, ob sich der zumindest eine Sender 1 in einem ersten Bereich vor dem Türsystem (10) befindet,
C) Bewegen des zumindest einen Türflügels 3 in Abhängigkeit von der Auswertung des Funksignals S durch einen Antrieb 8, so dass ein für das Tier geeigneter Zugang zu einem zweiten Bereich hinter dem Türsystem 10 gewährt oder verwehrt wird.

Das Türsystem 10 kann dabei optional ein abhängig wirkendes Türsystem 30 umfassen, dessen Türflügel 3 in Abhängigkeit von der Auswertung bewegt wird.

Die Steuereinheit weist den Datenspeicher mit dem Datensatz auf. Zur Steuerung des Türsystems 10 und/oder des Stalls 60 kann auf den Datensatz zurückgegriffen werden, der jedem Tier seine speziellen Zugangsrechte, Futtermengen etc. zuweist. In dem Datenspeicher ist dabei über den Datensatz eine Zuordnung von jeweiligen Identitätsinformationen von Sendern 1 zu jeweiligen Tieren gespeichert. Die Steuereinheit ist zum Datenaustausch mit einem oder mehreren Türsystemen 10 eingerichtet, wobei die ausgetauschten Daten die Identitätsinformationen umfassen.

Über den Sender können die Tiere eindeutig identifiziert werden. Für den Betrieb des Türsystems 10 und/oder des Stalls 60 reicht es, wenn der Sender am Tier angebracht ist und damit erfasst werden kann, wenn das Tier durch ein jeweiliges Türsystem 10 läuft und somit beim Passieren durch die Antennen 9 korrekt erfasst wird. Die eingesetzte Funktechnologie erlaubt eine hohe Reichweite von z. B. bis zu 100m. Ergänzt durch die Installation einiger weiterer Antennen im Stall 60 kann auch optional eine komplette Stallabdeckung und/oder eine Abdeckung auf der Koppel 90 ermöglicht werden. Somit können die Tiere im Stall 60 und der Umgebung lokalisiert werden. Bewegungsmuster können ausgewertet, was vorteilhaft sein kann bezüglich der Tiergesundheit, dem Herdenverband, der Nahrungs- und Wasseraufnahme, der Ruhezeiten. Sollte sich das Tier längere Zeit nicht bewegen ist es auch möglich, einen Alarm auszulösen.

Außerdem sind weitere Unterstützungsfunktionen für den Stallbesitzer realisierbar. Funktionen wie die Darstellung des Standorts des Tiers auf einer Karte des Stalls 60 werden möglich. Durch die Installation von Kameras zur Überwachung ist es auch möglich bei bestimmten Ereignissen eine bildliche Dokumentation durchzuführen. So können beispielsweise auch Genesungen nach Verletzungen oder ein Futterwechsel entsprechend automatisch dokumentiert und erfasst werden. Diese Daten können z. B. über die Steuereinheit an weitere Orte und/oder Personen übermittelt werden.

Über die Steuereinheit Abrechnungsdaten und/oder Gesundheitsdaten erfasst werden, z. B. zur Abrechnung zwischen Stallbetreiber und Tierbesitzer. Dies kann z. B. Daten zum Tier wie Krankheiten, behandelnde Ärzte, Hufschmied etc. betreffen. Auch andere Angebote des Stallbetreibers könnten über das System angeboten und durch den Tierbesitzer gebucht und anschließend gleich abgerechnet werden. Beispielsweise das An- oder Ausziehen einer Decke. Ebenfalls möglich ist die Vorgabe einer individuellen Ration für individuelle Tiere sowohl in Form von Fresszeiten als auch in Form von in Nährstoffen. Verknüpft mit Daten aus Futteranalysen (Heuanalyse, Kraftfutter, Mineralfutter) kann so die individuelle Ration berechnet und dem Tier zugeteilt werden. Es könnten in den unterschiedlichen Heubereichen 84, 86 unterschiedliche Sorten Heu angeboten und die Tiere den unterschiedlichen Heubereichen 84, 86 individuell zugeteilt werden.

Solche Steuerungsfunktionen können auch fernbedienbar ausgestaltet werden und somit z. B. dem Tierbesitzer eine gewisse Kontrolle über zum Beispiel Futtermengen und Koppel-/Weidezugang gegeben werden.

Der Datenspeicher mit dem Datensatz kann insbesondere zu Sicherheitszwecken alternativ oder zusätzlich auch als offline Version in einem der Türsysteme 10 z. B. des Selektionsbereiches 80 oder des Futterbereiches 70 angeordnet werden. Hierdurch können z. B. bei einem Ausfall der Steuereinheit der Stall 60 und/oder die Türsysteme 10 weiter betrieben werde.

## Patentansprüche

1. Türsystem (10) zur Zugangskontrolle für ein Tier, wobei das Türsystem (10) einen Funkempfänger und zumindest einen Türflügel (3) aufweist,
wobei der Funkempfänger eine Antenne (9) und eine Auswerteeinheit aufweist und eingerichtet ist, ein Funksignal (S) von zumindest einem Sender (1) zu empfangen und das Funksignal (S) auszuwerten,
wobei die Auswertung des Funksignals (S) eine erste und eine zweite Ermittlung umfasst, wobei die erste Ermittlung die Ermittlung von Identitätsinformationen des zumindest einen Senders (1) umfasst, und die zweite Ermittlung umfasst, ob sich der zumindest eine Sender (1) in einem ersten Bereich vor dem Türsystem (10) befindet,
wobei der zumindest eine Türflügel (3) in Abhängigkeit von der Auswertung durch einen Antrieb (8) so bewegbar ist, dass ein für das Tier geeigneter Zugang zu einem zweiten Bereich hinter dem Türsystem (10) gewährt oder verwehrt wird.

2. Türsystem nach Anspruch 1, wobei der Funkempfänger als Bluetooth-Empfänger ausgebildet ist und der zumindest eine Sender (1) als Bluetooth-Chip ausgebildet ist.

3. Türsystem nach Anspruch 1 oder 2, wobei die Antenne (9) als Antennenarray ausgebildet ist und die zweite Ermittlung eine Ermittlung eines Ankunftswinkels des Funksignals (S) umfasst.

4. Türsystem nach einem der vorhergehenden Ansprüche, wobei der zumindest eine Türflügel (3) zur Gewährung des Zugangs aus einem geschlossenen Zustand in Richtung des ersten Bereiches verschwenkbar ist.

5. Türsystem nach einem der vorhergehenden Ansprüche, wobei der Antrieb (8) mit einem längenveränderbaren Glied (7) ausgebildet ist und/oder der Funkempfänger im Bereich des Antriebs (8) angeordnet ist.

6. Türsystem nach einem der Ansprüche 1 bis 4, wobei der Antrieb (8) zumindest einen Elektromotor aufweist, welcher als Direktantrieb oder als Getriebevariante in der Aufhängung des zumindest einen Türflügels (3) angeordnet ist.

7. Türsystem nach einem der vorhergehenden Ansprüche, wobei der zumindest eine Türflügel (3) eine Kinematik aufweist, welche den zumindest einen Türflügel (3) mit einer Kraft beaufschlagt, welche vom Öffnungswinkel des zumindest einen Türflügels (3) abhängt.

8. Türsystem nach einem der vorhergehenden Ansprüche, weiter aufweisend ein erstes Flügelpaar (2), welches in Zugangsrichtung öffenbar ist, wobei das erste Flügelpaar (2) den Durchgang entgegen der Zugangsrichtung sperrt, wobei das erste Flügelpaar (2) selbsttätig schließend und vorgespannt ist.

9. Türsystem nach Anspruch 8, weiter aufweisend ein zweites Flügelpaar (12), wobei ein jeweiliger Flügel des zweiten Flügelpaares (12) von einem jeweiligen Flügel des ersten Flügelpaares (2) zumindest teilweise umfasst wird.

10. Türsystem nach Anspruch 9, wobei das zweite Flügelpaar (12) in Zugangsrichtung öffenbar ist, wobei das zweite Flügelpaar (12) den Durchgang entgegen der Zugangsrichtung sperrt, wobei das zweite Flügelpaar (12) selbsttätig schließend und vorgespannt ist.

11. Türsystem nach einem der vorhergehenden Ansprüche, wobei an den Seitenelementen des Rahmens des Türsystems (10) Zaunelemente (4) anschließbar sind, wobei der Winkel zwischen dem Rahmen und den Zaunelementen (4) beliebig wählbar ist.

12. Türsystem nach einem der vorhergehenden Ansprüche, wobei das Türsystem (10) durch Entfernen des Funkempfängers zu einem abhängig wirkenden Türsystem (30) umrüstbar ist.

13. Türsystem nach einem der vorhergehenden Ansprüche, wobei das Türsystem durch Entfernen des Funkempfängers, des Antriebs (8) und des zumindest einen Türflügels (3) zu einer Einbahntür (50) umrüstbar ist.

14. Stall für Tiere, welcher zumindest ein Türsystem (10) nach einem der vorhergehenden Ansprüche aufweist, wobei die Identitätsinformationen den jeweiligen Tieren in dem Stall zuordenbar sind.

15. Stall nach Anspruch 14, aufweisend mehrere abgezäunte Bereiche (70, 74, 80, 84, 86, 90), wobei ein Zugang zu zumindest einem der Bereiche (70, 74, 80, 84, 86, 90) durch das zumindest eine Türsystem (10) ermöglicht wird.

16. Stall nach Anspruch 14 oder 15, wobei die Bereiche zumindest einen Stallbereich (74, 82) und zumindest einen Fressbereich (70, 84, 86) umfassen.

17. Stall nach einem der Ansprüche 14 bis 16, wobei mindestens ein Selektionsbereich (80) vorgesehen ist, welcher über mehrere Türsysteme (10, 30, 50) nach einem der Ansprüche 1 bis 13 verlassen werden kann, wobei der mindestens eine Selektionsbereich (80) die ersten Bereiche der jeweiligen Türsysteme (10) umfasst.

18. Stall nach Anspruch 17, wobei das Betreten des mindestens einen Selektionsbereiches (80) durch ein Tier durch eine Sensortür (10) erfassbar ist und wobei die mehreren Türsysteme (10) zumindest ein abhängig wirkendes Türsystem (30) aufweisen, dessen zumindest einer Türflügel (3) in Abhängigkeit von einem durch die Sensortür (10) bereitgestellten Türsignal so bewegbar ist, dass der für das Tier geeignete Zugang zu dem zweiten Bereich hinter dem abhängig wirkenden Türsystem (30) gewährt oder verwehrt wird.

19. Stall nach Anspruch 18, wobei die Sensortür als ein Türsystem (10) nach einem der Ansprüche 1 bis 11 ausgebildet ist, welches keinem weiteren Tier den Zugang zu dem mindestens einen Selektionsbereich (80) gewährt, wenn eine Höchstzahl von Tieren in dem mindestens einen Selektionsbereich (80) erreicht ist.

20. Stall nach einem der Ansprüche 14 bis 19, weiter aufweisend zumindest eine Einbahntür (50) , wobei die zumindest eine Einbahntür (50) einem jeweiligen Tier den Durchgang in einer Durchgangsrichtung ermöglicht, wobei die zumindest eine Einbahntür (50) ein erstes Flügelpaar (2) aufweist, welches in Durchgangsrichtung öffenbar ist, wobei das erste Flügelpaar (2) den Durchgang entgegen der Durchgangsrichtung sperrt, wobei das erste Flügelpaar (2) selbsttätig schließend und vorgespannt ist.

21. Stall nach Anspruch 20, wobei die zumindest eine Einbahntür (50) ein zweites Flügelpaar (12) aufweist, wobei ein jeweiliger Flügel des zweiten Flügelpaares (12) von einem jeweiligen Flügel des ersten Flügelpaares (2) zumindest teilweise umfasst wird.

22. Stall nach Anspruch 21, wobei das zweite Flügelpaar (12) in Durchgangsrichtung öffenbar ist, wobei das zweite Flügelpaar (12) den Durchgang entgegen der Durchgangsrichtung sperrt, wobei das zweite Flügelpaar (12) selbsttätig schließend und vorgespannt ist.

23. Stall nach einem der Ansprüche 20 bis 22, wobei der zumindest eine Fressbereich als ein Futterbereich, insbesondere für Kraftfutter, ausgebildet ist,
wobei der Zugang zu dem Fressbereich über die zumindest eine Sensortür ermöglicht wird,
wobei das Verlassen des Fressbereiches über die zumindest eine Einbahntür (50) ermöglicht wird,
und wobei eine Ausgabevorrichtung für das Futter vorgesehen ist, wobei die Menge des ausgegebenen Futters, insbesondere Kraftfutters, von der Identitätsinformation abhängt.

24. Verfahren zur Zugangskontrolle zu einem Bereich in einem Stall für Tiere mittels eines Türsystems (10), wobei das Türsystem (10) einen Funkempfänger und zumindest einen Türflügel (3) aufweist, wobei das Verfahren aufweist:
Empfangen eines Funksignals (S) durch den Funkempfänger von zumindest einem Sender (1),
Auswerten des Funksignals (S), wobei bei der Auswertung Identitätsinformationen des zumindest einen Senders (1) ermittelt werden und ermittelt wird, ob sich der zumindest eine Sender (1) in einem ersten Bereich vor dem Türsystem (10) befindet,
Bewegen des zumindest einen Türflügels (3) in Abhängigkeit von der Auswertung des Funksignals (S) durch einen Antrieb (8), so dass ein für das Tier geeigneter Zugang zu einem zweiten Bereich hinter dem Türsystem (10) gewährt oder verwehrt wird.

25. Steuereinheit mit einem Datenspeicher, wobei in dem Datenspeicher eine Zuordnung von jeweiligen Identitätsinformationen von Sendern (1) zu jeweiligen Tieren gespeichert ist und die Steuereinheit zum Datenaustausch mit einem oder mehreren Türsystemen (10) nach einem der Ansprüche 1 bis 13 eingerichtet ist, wobei die ausgetauschten Daten die Identitätsinformationen umfassen.
